# EUROPÄISCHE PATENTSCHRIFT

(11) **EP 1 757 677 B1**
(45) Veröffentlichungstag und Bekanntmachung des Hinweises auf die Patenterteilung: **09.11.2011**
(21) Anmeldenummer: 05018207.0
(22) Anmeldetag: 22.08.2005
(51) Int. Cl.: C11D 7/02, C11D 7/14, C23G 5/00, C23G 3/02, B01J 20/10

(54) **Verfahren und Anlage zum Entfernen von Ölen, Fetten oder dergleichen hydrophoben Bestandteilen von Oberflächen eines Substrates**
Process and apparatus for removing oils, fats or similar hydrophobic compounds from the surfaces of a substrate
Procédé et dispositif pour enlever des huiles, graisses ou constituants hydrophobes des surfaces d'un substrat

(43) Veröffentlichungstag der Anmeldung: 28.02.2007
(73) Patentinhaber: Eurotec Vertriebsgesellschaft m.b.H., 59423 Unna (DE)
(72) Erfinder: Winkelkötter, Martina, 82319 Starnberg (DE)
(74) Vertreter: Nunnenkamp, Jörg

(56) Entgegenhaltungen:
- EP-A- 0 441 512
- EP-A- 0 618 287
- EP-A- 1 209 213
- GB-A- 2 163 640
- US-A- 1 865 417
- US-A- 3 037 886
- US-A- 4 395 347
- US-A- 5 101 532
- US-A1- 2001 047 576
- US-A1- 2005 037 937
- JP6182199: "Oil absorbing material - consists of support of oil-permeating material which is loaded with specific polymer particles" DERWENT, 7. Mai 1994 (1994-05-07), XP002189672

## Beschreibung

Die Erfindung betrifft ein Verfahren zum Entfernen von Ölen, Fetten oder dergleichen hydrophoben Bestandteilen von Oberflächen eines Substrates mit Hilfe einer Anlage.

Derartige Anlagen und zugehörige Reinigungsverfahren sind in vielfältiger Art und Weise bekannt und greifen in der Regel auf Lösungsmittel sowie beispielsweise Tenside entsprechend der DE 44 21 141 A1 zurück.

Daneben kennt man beispielsweise durch die US 2005/037937 A1 ein Verfahren zur Entfernung von öligen Verschmutzungen auf Oberflächen. Zu diesem Zweck wird die zugehörige Oberfläche mit einem porösen Trockenpulver bestreut, wobei das betreffende Pulver nach der Adsorption der hydrophoben Bestandteile von der Oberfläche entfernt wird. Einzelheiten einer hierfür erforderlichen Vorrichtung bleiben jedoch offen.

Ungeachtet dessen nutzt man Fettsäuren oder Fettsäuregemische zum Lösen der hydrophoben Bestandteile. Im Anschluss daran wird eine basische wässrige Lösung zur Umwandlung der Fettsäure in ein Fettsäuresalz unter Bildung einer Emulsion mit die gelösten hydrophoben Bestandteile aufweisenden Tensiden in der Wasserphase zugegeben (vgl. WO 99/11745 A1).

Ferner ist es beim Reinigen von Aluminium oder Aluminiumlegierungen bekannt, auf eine alkalische wässrige Lösung zurückzugreifen, wie sie beispielhaft in der US-PS 5 614 027 beschrieben wird.

Eine Anlage zum Entfetten von metallischen Oberflächen mit Hilfe von kolloidalem Silikasol bzw. Kieselgel wird in der US-PS 3 037 886 beschrieben. Zum Entfernen der Solbeschichtung wird die metallische Oberfläche mit einer Waschflüssigkeit abgespült.

Die bekannten Vorgehensweisen sind mit dem grundsätzlichen Problem behaftet, dass die von den Oberflächen des jeweiligen Substrates gelösten hydrophoben Bestandteile, in der Regel Öl und Fette, in Verbindung mit dem zugehörigen Lösungsmittel und/oder einer Waschflüssigkeit als Sondermüll behandelt werden müssen. Das zieht eine kostenträchtige Abfallentsorgung nach sich.

Zum Stand der Technik gehört ferner eine Vorrichtung zur Reinigung von Teppichen, wie sie in der GB 2 163 640 A vorgestellt wird. Hier wird unter anderem mit einem Trockenpulver gearbeitet, welches unter Berücksichtigung einer Düse auf die zu reinigende Oberfläche aufgebracht wird. Außerdem ist eine Absaugeinheit vorgesehen.

Die schließlich noch zu berücksichtigende US 2001/0047576 A1 befasst sich mit einem Verfahren und einer zugehörigen Anlage zur Entzunderung von Metall. Zu diesem Zweck werden Keramikpartikel mit Hilfe einer Bedüsungseinrichtung auf die zu bearbeitende Metalloberfläche aufgebracht. Die Keramikpartikel lassen sich zum Teil rückgewinnen und im Kreislauf führen.

Der Erfindung liegt das technische Problem zugrunde, ein Verfahren zum Entfernen von Ölen, Fetten oder dergleichen hydrophoben Bestandteilen von Oberflächen eines Substrates mit Hilfe einer Anlage anzugeben, welches verringerte Kosten bei der Aufbereitung nach sich zieht.

Zur Lösung dieser technischen Problemstellung ist Gegenstand der Erfindung ein Verfahren nach Anspruch 1.

Die beschriebene Anlage verfügt folglich über eine Bedüsungseinrichtung, welche das Trockenpulver unterstützt durch den Druck eines Mediums auf die zu reinigende Oberfläche des Substrates aufbringt. Bei dem genannten Medium kann es sich um Luft oder auch um ein anderes Gas handeln, welche(s) das Trockenpulver fluidisiert, d. h. "fließfähig" macht. Dadurch wird bereits die erforderliche mechanische Energie aufgebracht, um die Adsorption der hydrophoben Bestandteile im Trockenpulver auf der Oberfläche des Substrates zu begünstigen. Zusätzlich zu dieser Bedüsungseinrichtung verfügt die beschriebene Anlage noch über eine Ablöseeinheit, welche zum Entfernen des mit in den Poren adsorbierten hydrophoben Bestandteile belasteten Trockenpulvers von dem Substrat dient. Im einfachsten Fall handelt es sich bei der Ablöseeinheit um eine Absaugeinrichtung, wenngleich natürlich auch andere Vorrichtungen an dieser Stelle denkbar sind.

Um die mechanische Einwirkung des Trockenpulvers auf die zu reinigende Oberfläche ergänzend zu intensivieren, mag zusätzlich zu der Bedüsungseinrichtung eine Bürstenkolonne vorgesehen sein. Diese verfügt in der Regel über schräggestellte Bürsten, damit das aufgedüste Trockenpulver gleichmäßig über das Substrat verteilt wird. Eine solche Vorgehensweise empfiehlt sich besonders für den Fall, dass ein durchlaufendes Metallband oder dergleichen entfettet bzw. entölt werden soll.

Dabei geht es insgesamt darum, hydrophobe Bestandteile von Oberflächen eines beliebigen Substrates zu entfernen. Tatsächlich kommen als Substrate sowohl Metall- als auch Nichtmetallgegenstände in Frage. Ebenso Kunststoff-, Holz- und Keramikgegenstände sowie andere Materialien, die mit mineralischen, synthetischen, tierischen, pflanzlichen Ölen und/oder Fetten kontaminiert sind. Solche Verunreinigungen treten in der Regel bei der Metallverarbeitung, beispielsweise beim Stanzen, Bohren, Umformen, bei der spangebenden Verformung, beim Ziehen, Tiefziehen etc. auf. Denn die vorgenannten Bearbeitungsschritte erfordern regelmäßig den zusätzlichen Einsatz von Bearbeitungsölen oder -fetten.

Außerdem werden die betreffenden Substrate, beispielsweise Eisenmetalle und auch Nichteisenmetalle, zum Schutz gegen Korrosion mit Korrosionsschutzölen oder -fetten behandelt, die vor der jeweiligen Weiterverarbeitung entfernt werden müssen. Denn ansonsten lassen sich solche Substrate nicht lackieren bzw. mit einer gewünschten Beschichtung überziehen.

Im Gegensatz zu den bekannten Vorgehensweisen zum Entfetten von Oberflächen mit beispielsweise wässrigen alkalischen Lösungen, die bei der Entsorgung als Sondermüll behandelt werden müssen, greift die Erfindung auf eine trockene Entfernung der hydrophoben Bestandteile zurück. Das heißt, die hydrophoben bzw. "wasserscheuen" Substanzen bzw. Bestandteile werden lösungsmittelfrei (und damit natürlich auch wasserfrei) von dem Trockenpulver adsorbiert und dementsprechend in pulvriger Form von dem Substrat entfernt. Tatsächlich führt die Adsorption der hydrophoben Bestandteile dazu, dass sich in dem entfernten Trockenpulver Körner mit einer gegenüber dem unadsorbierten Zustand vergrößerten Korngröße bilden, die problemlos in einem nachfolgenden Schritt, beispielsweise beim Durchsieben, ausgesondert werden können. Das heißt, das erfindungsgemäß eingesetzte Trockenpulver vorgegebener Porosität wird im Kreislauf geführt, wobei die jeweils mit den hydrophoben Bestandteilen gesättigten Pulverbestandteile ausgeschleust und durch unbehandeltes neues Pulver ersetzt werden.

Tatsächlich liegt das eingesetzte Trockenpulver mit einer Körnung mit Korngrößen unterhalb von 500 Mikrometern vor. Insbesondere empfiehlt die Erfindung eine Korngröße von weniger als 200 Mikrometer, vorzugsweise unterhalb von 150 Mikrometer. Ganz besonders bevorzugt ist ein Korngrößenbereich von weniger als 100 Mikrometer, um eine insgesamt große Oberfläche für die Adsorption bereitzustellen. Unter Berücksichtigung dieser Prämissen kann dann das jeweils mit den hydrophoben Bestandteilen gesättigte Trockenpulver unschwer ausgeschleust werden, indem mit entsprechender Siebung gearbeitet wird.

Für die Erfindung von besonderer Bedeutung ist der Umstand, dass das eingesetzte Trockenpulver über eine vorgegebene Porosität verfügt, mithin eine große innere (und gegebenenfalls äußere) Oberfläche aufweist, die als Adsorptionsoberfläche für die hieran anzulagernden hydrophoben Bestandteile fungiert. Tatsächlich beträgt die innere Oberfläche des eingesetzten Trockenpulvers in der Regel mehr als 10 m²/g, wobei üblicherweise sogar mehr als 50 m²/g für die spezifische Oberfläche beobachtet werden. Solche Werte für die spezifische Oberfläche werden üblicherweise von Tonen bzw. Tonmineralen problemlos erreicht und sind die eigentlichen Träger der speziellen Toneigenschaften. Die vorgenannte spezifische Oberfläche lässt sich wie allgemein bekannt durch eine vollständige Belegung aller Oberflächen mit polaren organischen Molekülen ermitteln und umfasst dabei Komponenten mit innerkristaliner Quellfähigkeit und zwar sowohl äußere wie innere Oberflächen. Dabei liegt der Anteil der inneren Oberflächen an der gesamten spezifischen Oberfläche größtenteils zwischen 80 % und 90 %.

Im Rahmen der Erfindung wird ein Trockenpulver eingesetzt, welches auf ein Silikatpulver mit einem Anteil von bis zu 90 Gew.-% zurückgreift. Darüber hinaus mögen diesem Silikatpulver noch weitere Adsorbentien hinzugefügt werden, wie zum Beispiel Aktivkohle, Talkum usw. sowie andere Mineralien.

Insgesamt hat es sich als günstig erwiesen, das Silikatpulver als Bestandteil des Trockenpulvers als Mischung aus einem Tektosilikat und einem Schichtsilikat auszubilden. Bei dem Schichtsilikat handelt es sich regelmäßig um ein quellfähiges Tonmineral mit Schichtgitterstruktur der Smektitgruppe, welches in Gestalt von Bentonit vorliegen mag. Natürlich können auch vergleichbare Tonminerale wie zum Beispiel Kaolinit, Polygorskit, Illit, Chlorit, Pyrophyllit, lmogolit etc. oder Montmorillonite zum Einsatz kommen. Das betreffende Tonmineral bzw. Schichtsilikat kann mit Calcium, Magnesium oder Natrium belegt sein.

Darüber hinaus greift das Silikatpulver auf ein Tektosilikat bzw. Gerüstsilikat zurück. Solche Gerüstsilikate zeichnen sich durch einen sehr lockeren und weitmaschigen Aufbau mit kanalartigen Hohlräumen aus. Tatsächlich eröffnen die Hohlräume die Möglichkeit der Einlagerung von Stoffen, und zwar ohne wesentliche Veränderung des Gitteraufbaus. Das unterscheidet sie von den Schichtsilikaten, die bei der Einlagerung der hydrophoben Bestandteile in der Regel ihren Schichtabstand ändern, folglich quellen.

Als Gerüstsilikate können natürliche Mineralgemenge mit dem Bestandteil Clinoptilolith oder auch Zeolith sowie Chabasit zum Einsatz kommen. Außerdem empfiehlt die Erfindung, das jeweilige Silikatpulver hinsichtlich seiner inneren Oberfläche und/oder der Porenverteilung an die zu entfernenden hydrophoben Bestandteile anzupassen. Das heißt, je nach "Länge" der Kohlenwasserstoffketten der hydrophoben Bestandteile wird man die Porenstruktur entsprechend einstellen und vorgeben, damit sich diese Kettenbestandteile in den Hohlräumen einlagern können. Diese Anpassung kann durch die Behandlung mit Säuren, wie zum Beispiel Schwefelsäuren, Salzsäure oder auch unter Rückgriff auf eine organische Säure vorgenommen werden. Dadurch lässt sich nicht nur die Porenverteilung und/oder deren Beschaffenheit vorgeben, sondern auch die Oberflächencharakteristik der Hohlräume steuern. Denkbar ist es hier, für einen organophilen (das heißt organische Bestandteile bevorzugenden) und/oder hydrophilen (das heißt Wasser anziehenden) Charakter zu sorgen.

Insgesamt hat es sich bewährt, wenn die beiden Mischungskomponenten Tektosilikat und Schichtsilikat des Silikatpulvers in einem bestimmten Mischungsverhältnis vorliegen, welches von 0 bis 100 Gew.-% sowohl für das Tektosilikat als auch das Schichtsilikat reichen kann. Das heißt, das Silikatpulver kann vollständig aus dem Tektosilikat oder aber auch vollständig aus dem Schichtsilikat bestehen, wobei selbstverständlich auch Zwischenstufen denkbar sind und umfasst werden. So empfiehlt die Erfindung bevorzugt den Rückgriff auf 30 Gew.-% bis 70 Gew.-% Tektosilikat, wobei besonders bevorzugt ein Bereich von 40 Gew.-% bis 60 Gew.-% Tektosilikat ist. Demgegenüber wird das Schichtsilikat in der Regel zu 20 Gew.-% bis 50 Gew.-% eingesetzt, wobei ein besonders bevorzugter Bereich zwischen 30 Gew.-% und 40 Gew.-% des Schichtsilikates liegt.

Insgesamt macht das Silikatpulver bzw. die vorgenannte Mischung - wie bereits beschrieben - größtenteils bis zu 90 Gew.-% des Trockenpulvers aus, wobei das Trockenpulver selbstverständlich auch aus 100 Gew.-% Silikatpulver bestehen kann, wenn auf die bereits angesprochenen Zusätze, wie zum Beispiel Aktivkohle, Glimmer, Talkum etc. verzichtet wird.

Im Ergebnis wird eine Anlage beschrieben, welche die trockene Entfernung hydrophober Bestandteile von den Oberflächen des Substrates präferiert.

Dadurch besteht die Möglichkeit, das Trockenpulver im Kreislauf zu führen, wobei nur und ausschließlich mit den hydrophoben Bestandteilen gesättigte Pulverkörner ausgeschleust werden. Dadurch muss je nach Umlauf nur ein geringer Teil des Trockenpulvers durch Neupulver ersetzt werden, so dass die Kosten gering werden.

Von besonderer Bedeutung ist zusätzlich noch der Umstand, dass das ausgeschleuste Trockenpulver problemlos entsorgt werden kann und im Vergleich zu konventionellen Vorgehensweisen viel geringere Abfallraten zu erwarten sind, weil lösungsmittelfrei gearbeitet wird.

Außerdem lässt sich das Verfahren unter Rückgriff auf einfach aufgebaute Anlagen realisieren, die zudem die Möglichkeit eröffnen, eine dezentrale Reinigung vornehmen zu können. Das heißt, jeder einzelne Metallbearbeitungsschritt kann mit seiner eigenen Reinigungsanlage flankiert werden. Außerdem besteht die Option, das erfindungsgemäße Trockenpulver in Verbindung mit einem Handreinigungsmittel einzusetzen. Hierbei mag es sich um ein Tuch, eine Bürste, einen Pinsel etc. handeln, welcher mit dem betreffenden Trockenpulver imprägniert ist und für die Handreinigung der Substrate eingesetzt wird.

Durch den Rückgriff des Silikatpulvers auf die Mischung aus dem Tektosilikat und dem Schichtsilikat wird ein durch das Mischungsverhältnis einstellbares Größenspektrum an Poren zur Adsorption der hydrophoben Bestandteile zur Verfügung gestellt. Tatsächlich sind die Schichtsilikate bzw. quellfähigen Dreischicht-Silikate durch eine ausgeprägte Mikro-/Mesoporosität gekennzeichnet. Durch ihre aufweitbaren Zwischenschichträume können sie wässrige Bestandteile sowie polare Verbindungen fest adsorbieren. Außerdem kann durch geeignete und eingangs bereits beschriebene Behandlungsverfahren (Aktivierung mit beispielsweise Säure) die Porosität, die chemische Charakteristik sowie die Beschaffenheit der Oberflächen auf den jeweiligen Einsatzzweck, sprich die zu adsorbierenden Kohlenwasserstoffketten, abgestimmt werden. Infolge der Adsorption weiten sich die Zwischenschichträume auf, so dass die einzelnen Körner quellen und durch Sieben ausgeschleust werden können.

Demgegenüber besitzen die Tektosilikate ein engmaschiges, definiertes Porensystem und verfügen hierdurch über die notwendigen Hohlräume zur Adsorption. Wie im Falle der Dreischicht-Silikate überwiegen in den Hohlräumen die negativen Ladungen, so dass besonders polare hydrophobe Bestandteile elektrostatisch adsorbiert werden. Im Gegensatz zu den Schichtsilikaten verbleiben die Gerüstsilikate bzw. Tektosilikate bei der Adsorption größenstabil, neigen also nicht zum Quellen. Wie die Schichtsilikate lassen sich auch die Tektosilikate durch eine geeignete Oberflächenbehandlung (mit beispielsweise Säuren) für den jeweiligen Einsatzzweck optimieren.

Durch die erfindungsgemäße Trockenentfettung bzw. -entölung kann die Oberflächenbehandlungszeit im Vergleich zu konventionellen Vorgehensweisen deutlich reduziert werden, so dass beispielsweise bei der Entfettung von Metallbändern die Takt- und Durchlaufzeiten drastisch verringert sind. Darüber hinaus verfügt die für die Entfettung eingesetzte Anlage über einen im Vergleich zu bisherigen Vorrichtungen deutlich geringeren Platzbedarf, wodurch die Investitionskosten niedriger sind und die bereits beschriebene dezentrale Reinigung überhaupt erst ermöglicht wird. Gleichzeitig lassen sich der Wasserund Stromverbrauch und damit die Energiekosten mindern und der Einsatz von gesundheitsgefährdenden Lösemitteln und deren Sondermüllentsorgung entfällt. Gleichzeitig wird nach der Behandlung eine Oberflächenenergie zwischen 35 und 40 bis 50 mN/m beobachtet, welche das anschließend problemlose Aufbringen von Farbe, Klebstoff, Kunststoff, Metall oder anderen Beschichtungen auf dem Substrat erlaubt. Darin sind die wesentlichen Vorteile zu sehen.

Im Folgenden wird die Erfindung anhand einer lediglich ein Ausführungsbeispiel darstellenden Zeichnung näher erläutert; es zeigen:
- Fig. 1: eine erfindungsgemäße Anlage zum Entfernen von Ölen, Fetten oder dergleichen;
- Fig. 2: eine abgewandelte Ausführungsform.

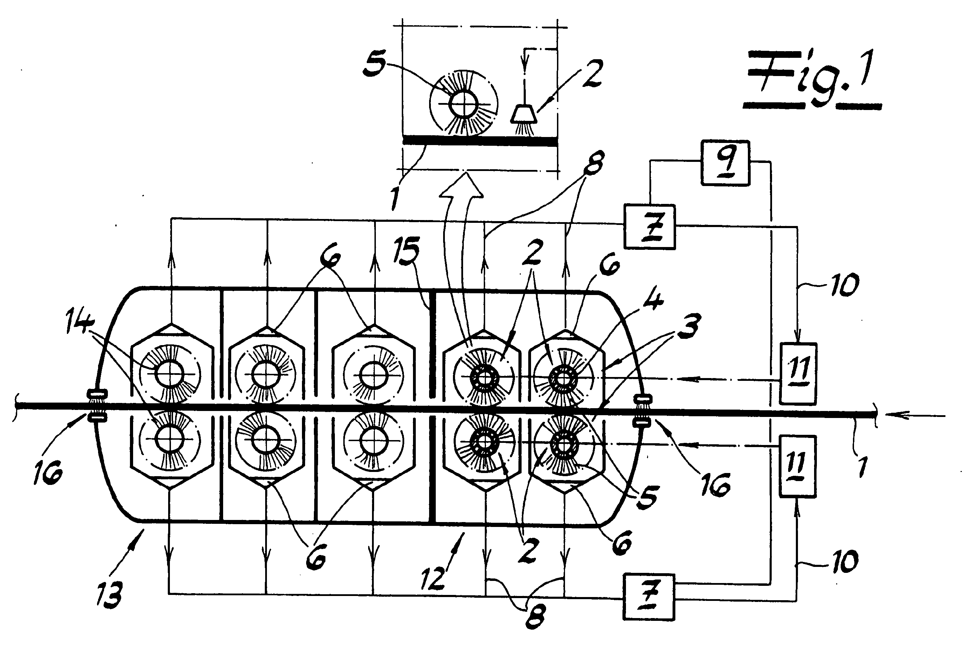

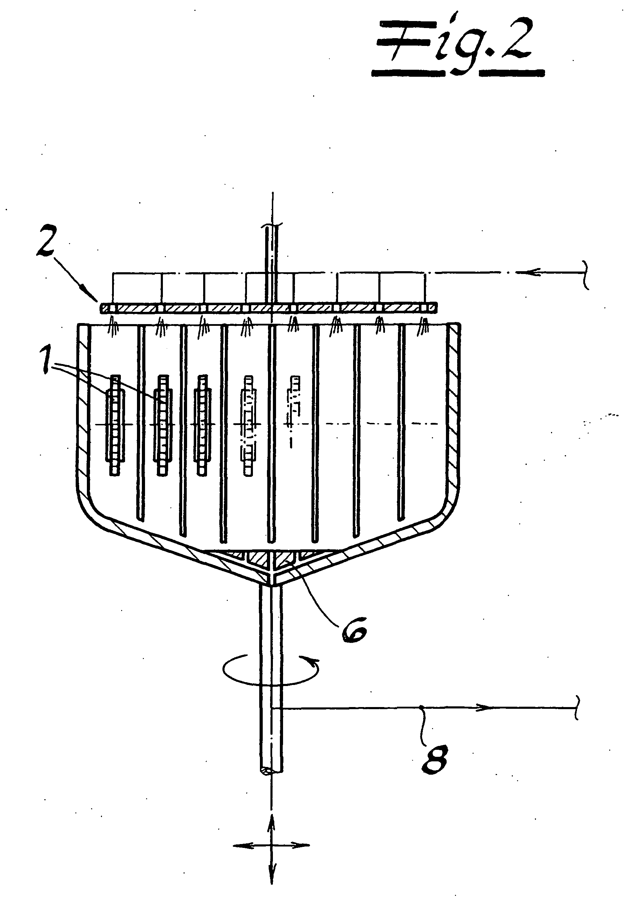

In den Figuren ist eine Anlage zum Entfernen von Ölen, Fetten oder dergleichen hydrophoben Bestandteilen von Oberflächen eines Substrates 1 dargestellt. Bei dem Substrat 1 handelt es sich im Rahmen der Fig. 1 um ein durchlaufendes Metallband 1, während die Fig. 2 ein zu entfettendes Maschinenelement 1 in Gestalt eines Zahnrades 1 zeigt. Es sollte betont werden, dass insofern nur Beispiele dargestellt sind, die keineswegs einschränkend wirken. So könnte es sich bei den Substraten nach Fig. 2 auch um Messer oder Gabeln in der Besteckindustrie handeln.

In beiden Fällen verfügt die gezeigte Anlage über eine Bedüsungseinrichtung 2, die in eine Bürstenkolonne 3 nach Fig. 1 integriert ist. Dagegen greift die Fig. 2 ausschließlich auf die Bedüsungseinrichtung 2 zurück ohne zusätzlich noch mit einer Bürstenkolonne 3 ausgerüstet zu sein. Im Rahmen der Darstellung nach Fig. 1 ist die Bedüsungseinrichtung 2 in hohlgebohrten Achsen 4 der Bürstenkolonne 3 realisiert, wobei die hohlgebohrten Achsen 4 über Austrittsöffnungen verfügen, durch welche das eingangs bereits beschriebene Trockenpulver in Verbindung mit der das Trockenpulver fördernden Luft die Bedüsungseinrichtung 2 verlässt. Alternativ hierzu kann auch mit neben den einzelnen Bürsten 5 platzierten Bedüsungseinrichtungen 2 gearbeitet werden, wie dies der vergrößerte Ausschnitt in der Fig. 1 deutlich macht.

Von der Bedüsungseinrichtung 2 gelangt das durch Luft in den fluiden Zustand überführte Trockenpulver direkt auf das Substrat 1. Durch diesen Vorgang verteilt sich das Trockenpulver gleichmäßig auf dem Substrat 1 und kommt es zu einem innigen Kontakt zwischen dem aufgebrachten Trockenpulver und einer Öl- oder Fettschicht auf dem Substrat 1. Darüber hinaus eröffnet dieser fluide Zustand des Trockenpulvers die Möglichkeit, dieses elektrostatisch aufzuladen. Außerdem kann das fluidisierte Trockenpulver mit Hilfe bekannter Maschinen und Anlagen verarbeitet werden, wie sie beispielsweise aus der elektrostatischen Pulverbeschichtung bekannt sind. Das Gleiche gilt für dort bereits eingesetzte Rückgewinnungsanlagen, die vorteilhaft zum Rückgewinnen des erfindungsgemäßen Trockenpulvers im dargestellten Zusammenhang eingesetzt werden können.

Darüber hinaus eröffnet die elektrostatische Aufladung des fluidisierten Trockenpulvers die Möglichkeit, dieses nicht unbedingt flächendeckend auf das zu reinigende Substrat 1 aufbringen zu müssen. Tatsächlich reicht es aus, wenn beispielsweise das Substrat 1 positiv aufgeladen wird und demgegenüber auf eine negativ aufgeladene Wolke des fluidisierten Trockenpulvers trifft. Selbstverständlich kann auch mit umgekehrten Polaritäten gearbeitet werden. Jedenfalls sorgt die umgekehrte Polung von einerseits Substrat 1 und andererseits Trockenpulver dafür, dass sich dieses flächendeckend und gleichmäßig auf dem Substrat 1 niederschlägt, wodurch der gewünschte Reinigungsvorgang bei minimalem Einsatz an Trockenpulver begünstigt wird.

In jedem Fall sorgt die durch die Luftbestäubung und/oder elektrostatische Aufladung des fluidisierten Trockenpulvers realisierte Einwirkung mechanischer Energie dafür, dass die Öl- bzw. Fettoberfläche auf dem Substrat 1 teilweise aufgebrochen wird. In die gleiche Richtung zielen die Bürsten 5. - Selbstverständlich können auch andere Einrichtungen flankierend oder alternativ eingesetzt werden, um die notwendige Einwirkung mechanischer Energie darzustellen. Denkbar ist hier beispielsweise der Einsatz von Ultraschall.

Zusätzlich zu der Bedüsungseinrichtung 2 ist noch eine Ablöseeinheit 6 vorgesehen, bei welcher es sich im Rahmen der Darstellung um eine Absaugeinheit 6 handelt. Diese saugt das gesamte auf das Substrat 1 aufgebrachte Trockenpulver ab und führt dieses einer Rückgewinnungsstation 7 über Leitungen 8 zu. In der Rückgewinnungsstation 7 wird das Trockenpulver im Wesentlichen gesiebt, wobei größtenteils mit dem Öl oder Fett gesättigte Körner ausgeschleust werden. Je nach dem, wie groß der Anteil des ausgeschleusten Trockenpulvers bemessen ist, sorgt eine Steuereinrichtung 9 mit nachgeschalteter Zugabevorrichtung dafür, dass dieser Anteil durch Neupulver wieder ausgeglichen wird und die Pulvermenge erhalten bleibt.

Das solchermaßen aufbereitete bzw. rückgewonnene Trockenpulver wird anschließend über eine Rückführleitung 10 und einen Vorratsbehälter 11 der erneuten Behandlung des Substrates 1 wieder zugeführt.

Man erkennt, dass die Anlage nach Fig. 1 in zwei Stationen unterteilt ist, und zwar eine Station 12 zur Reinigung mit dem Trockenpulver und eine Station 13 zur Endreinigung, die lediglich mit Absaugeinheiten 6 ausgerüstet ist, ohne zusätzlich Trockenpulver aufzubringen. Im Gegensatz zu den Bürsten 5, die aus Kunststoff, Rosshaar (zum Verhindern einer statischen Aufladung des Substrates 1) oder einem sonst geeigneten Material gefertigt sind, handelt es sich bei den in der Station 13 eingesetzten Bürsten 14 um solche aus beispielsweise Straußenfedern, was jedoch nicht zwingend ist.

Beide Stationen 12, 13 sind durch eine Trennwand 15 voneinander separiert. Nach außen hin sorgen durch Bürsten verschlossene Schlitze 16 dafür, dass das Substrat 1 bzw. Metallband nicht unnötigerweise Schmutz in die beiden Stationen 12, 13 hereinträgt bzw. Schmutzpartikel in die Anlage hineingeraten.

Bei der Anlage nach Fig. 2 werden die einzelnen Substrate 1 bzw. Maschinenelemente 1 in einer Revolveraufnahme aufgenommen, die sich während des Bedüsungsvorganges mit der Bedüsungseinrichtung 2 um eine Achse wie angedeutet drehen mag. Gleichzeitig oder nach dem Bedüsen kann der revolverartige Behälter zu Rüttelbewegungen veranlasst werden, was durch zusätzliche Pfeile angedeutet ist. Durch diese Rüttelbewegungen wirkt mechanische Energie ein und sorgt für die Einarbeitung des in den einzelnen Schächten des Revolvers vorhandenen Pulvers in die Oberfläche des Substrates 1. Nach der Adsorption der hydrophoben Bestandteile in dem Trockenpulver wird das Trockenpulver mit Hilfe einer angedeuteten Ablöseeinheit bzw. Absaugeinheit 6 entfernt und wie zuvor beschrieben aufbereitet und im Kreislauf wieder zugeführt.

## Patentansprüche

1. Verfahren zum Entfernen von Ölen, Fetten oder dergleichen hydrophoben Bestandteilen von Oberflächen eines Substrates (1),
mit Hilfe einer Anlage, welche mit einer Bedüsungseinrichtung (2) zum Aufbringen eines Trockenpulvers vorgegebener Porosität, und mit einer Ablöseeinheit (4) zum Entfernen des die adsorbierten hydrophoben Bestandteile aufweisenden Trockenpulvers ausgerüstet ist,
wonach das Trockenpulver eine Körnung mit Korngrößen unterhalb von 500 Mikrometern und ein Silikatpulver mit einem Anteil von bis zu 90 Gew.-% aufweist sowie
unter zusätzlicher Einwirkung mechanischer Energie mittels der Bedüsungseinrichtung (2) durch den Druck eines gasförmigen Mediums fluidisiert auf die zu reinigende Oberfläche aufgebracht wird,
wonach ferner das auf das Substrat (1) aufgebrachte Trockenpulver mit Hilfe der als Absaugeinheit (6) ausgebildeten Ablöseeinheit (6) abgesaugt und **dadurch** das Trockenpulver nach der Adsorption der hydrophoben Bestandteile in den Poren entfernt sowie einer Rückgewinnungsstation (7) über Leitungen (8) zugeführt wird, in welcher das Trockenpulver im Wesentlichen gesiebt wird, und wobei größtenteils mit dem Öl oder Fett gesättigte Körner ausgeschleust werden,
und wonach abschließend das solchermaßen rückgewonnene Trockenpulver über eine Rückführleitung (10) und einen Vorratsbehälter (11) der erneuten Behandlung des Substrates (1) wieder zugeführt und folglich im Kreislauf geführt wird.

2. Verfahren nach Anspruch 1, **dadurch gekennzeichnet, dass** das Trockenpulver eine Körnung mit Korngrößen von weniger als 200 Mikrometer, vorzugsweise unterhalb von 150 Mikrometern und besonders bevorzugt von weniger als 100 Mikrometern aufweist.

3. Verfahren nach Anspruch 1 oder 2, **dadurch gekennzeichnet, dass** das Silikatpulver als Mischung aus einem Tektosilikat und einem Schichtsilikat ausgebildet ist, wobei die vorgenannten Mischungskomponenten in einem Mischungsverhältnis von 0 bis 100 Gew.-% Tektosilikat, vorzugsweise 30 bis 70 Gew.-%, besonders bevorzugt 40 bis 60 Gew.-% Tektosilikat und 0 bis 100 Gew.-% Schichtsilikat, vorzugsweise 20 bis 50 Gew.-%, besonders bevorzugt 30 bis 40 Gew.-% Schichtsilikat, vorliegen.

4. Verfahren nach einem der Ansprüche 1 bis 3, **dadurch gekennzeichnet, dass** das Trockenpulver hinsichtlich seiner inneren Oberfläche und/oder der Porenverteilung an die zu entfernenden hydrophoben Bestandteile angepasst wird.

5. Verfahren nach einem der Ansprüche 1 bis 4, **dadurch gekennzeichnet, dass** dem Trockenpulver neben dem Silikatpulver weitere Adsorptionsmaterialien wie Aktivkohle, amorphe Silikatbestandteile und Minerale zugesetzt sind.

6. Verfahren nach einem der Ansprüche 1 bis 5, **dadurch gekennzeichnet, dass** als Tektosilikat ein Zeolith, insbesondere ein natürlich vorkommender Clinoptilolith oder Chabasit, zum Einsatz kommt.

7. Verfahren nach einem der Ansprüche 1 bis 6, **dadurch gekennzeichnet, dass** als Schichtsilikat smektitische Tonminerale, insbesondere natürlich vorkommender Montmorillonit, zum Einsatz kommen.

8. Verfahren nach einem der Ansprüche 1 bis 7, **dadurch gekennzeichnet, dass** zusätzlich zu der Bedüsungseinrichtung (2) eine Bürstenkolonne (3) vorgesehen ist.

## Claims

1. A method for removing oils, fats or like hydrophobic components from surfaces of a substrate (1),
with the aid of an apparatus provided with a sprinkler device (2) for applying a dry powder with a given porosity, and with a stripping unit (4) for removing the dry powder and its adsorbed hydrophobic components;
wherein the dry powder has a granulometry with grain sizes of less than 500 micrometers and contains a silicate powder in a proportion of up to 90% by weight; and which
is applied to the surface to be cleaned, fluidized under the pressure of a gaseous medium, with additional mechanical energy, by means of the sprinkler device (2);
wherein further, the dry powder applied to the substrate (1) is sucked off with the aid of the stripping unit (6) which is constructed as a suction unit (6) by means of which the dry powder is removed after the hydrophobic components have been adsorbed into the pores, and is supplied to a recovery station (7) via lines (8) in which the dry powder is essentially screened, and whereby most of the grains which are saturated with oil or fat are ejected;
and wherein the dry powder recovered thereby is then recycled via a return line (10) and a storage container (11) for renewed treatment of the substrate (1) and consequently is guided in a circuit.

2. The method according to claim 1, **characterized in that** the dry powder has a granulometry with a grain size of less than 200 micrometres, preferably less than 150 micrometres and particularly preferably less than 100 micrometres.

3. The method according to claim 1 or claim 2, **characterized in that** the silicate powder is a mixture of a tectosilicate and a laminar silicate, wherein said components of the mixture are present in a mixing ratio of 0 to 100% by weight of tectosilicate, preferably 30% to 70% by weight, particularly preferably 40% to 60% by weight of tectosilicate, and 0 to 100% by weight of laminar silicate, preferably 20% to 50% by weight, particularly preferably 30% to 40% by weight of laminar silicate.

4. The method according to one of claims 1 to 3, **characterized in that** the dry powder is adapted to the hydrophobic components to be removed in respect of its internal surface area and/or pore distribution.

5. The method according to one of claims 1 to 4, **characterized in that** in addition to the silicate powder, the dry powder is supplemented with further adsorbent materials such as activated charcoal, amorphous silicate components and minerals.

6. The method according to one of claims 1 to 5, **characterized in that** the tectosilicate employed is a zeolite, in particular a naturally occurring clinoptilolite or chabasite.

7. The method according to one of claims 1 to 6, **characterized in that** smectite clay minerals are employed as the laminar silicate, in particular naturally occurring montmorillonite.

8. The method according to one of claims 1 to 7, **characterized in that** a brush column (3) is provided in addition to the sprinkler device (2).

## Revendications

1. Procédé destiné à enlever des huiles, des graisses ou des composants hydrophobes apparentés se trouvant sur des surfaces d'un substrat (1)
à l'aide d'une installation équipée d'un dispositif de projection (2) destiné à appliquer une poudre sèche ayant une porosité préalablement définie et d'une unité de retrait (4) destinée à enlever ladite poudre sèche comportant les composants hydrophobes adsorbés,
selon lequel ladite poudre sèche présente une granulométrie inférieure à 500 micromètres et une proportion inférieure ou égale à 90 % en poids d'une poudre de silicate et
est appliquée, sous l'effet supplémentaire d'une énergie mécanique, sur la surface à nettoyer au moyen du dispositif de projection (2) après sa fluidisation par la pression d'un milieu gaseux,
selon lequel, en outre, ladite poudre sèche appliquée sur le substrat (1) est aspirée par l'unité de retrait (6) réalisée sous forme d'une unité d'aspiration (6) pour ainsi enlever ladite poudre sèche ayant absorbé les composants hydrophobes dans ses pores et l'acheminer, à travers des conduits (8), à une station de récupération (7) dans laquelle ladite poudre sèche est essentiellement tamisée et les grains largement saturés d'huile ou de graisse sont évacués,
et selon lequel, enfin, la poudre sèche ainsi récupérée est réacheminée, à travers un conduite de recyclage (10) et un réservoir (11), vers un nouveau traitement du substrat (1) pour ainsi subir un recyclage.

2. Procédé selon la revendication 1, **caractérisé en ce que** ladite poudre sèche présente une granulométrie inférieure à 200 micromètres, de préférence inférieure à 150 micromètres et, avec une préférence particulière, inférieure à micromètres.

3. Procédé selon les revendications 1 ou 2, **caractérisé en ce que** ladite poudre de silicate est réalisée sous forme d'un mélange entre un tectosilicate et un phyllosilicate, les composants de mélange précités se présentant dans un rapport de mélange comprenant 0 à 100 % en poids de tectosilicate, de préférence 30 à 70 % en poids et, avec une préférence particulière, 40 à 60 % en poids de tectosilicate et 0 à 100 % en poids de phyllosilicate, de préférence 20 à 50 % en poids et, avec une préférence particulière, 30 à 40 % en poids de phyllosilicate.

4. Procédé selon l'une des revendications 1 à 3, **caractérisé en ce que** ladite poudre sèche est adaptée, en ce qui concerne sa surface intérieure et/ou sa porosité, aux composants hydrophobes à enlever.

5. Procédé selon l'une des revendications 1 à 4, **caractérisé en ce que**, outre la poudre de silicate, d'autres matériaux d'adsorption tels que le charbon actif, les composants de silicate amorphes et les minéraux, ont été ajoutés à ladite poudre sèche.

6. Procédé selon l'une des revendications 1 à 5, **caractérisé en ce que** l'on met en oeuvre, en tant que tectosilicate, une zéolite, notamment une clinoptilolite ou chabazite d'origine naturelle.

7. Procédé selon l'une des revendications 1 à 6, **caractérisé en ce que** l'on met en oeuvre, en tant que phyllosilicate, des minéraux argileux de type smectite, notamment de la montmorillonite d'origine naturelle.

8. Procédé selon l'une des revendications 1 à 7, **caractérisé en ce que** l'on prévoit, outre le dispositif de projection (2), une série de brosses (3).
